# EUROPEAN PATENT SPECIFICATION

(11) **EP 2 986 154 B1**
(45) Date of publication and mention of the grant of the patent: **19.02.2020**
(21) Application number: 13818186.2
(22) Date of filing: 29.11.2013
(51) Int. Cl.: A23L 33/10, A23L 2/39, A23G 1/44, A23G 1/56, A23L 19/00, A23L 33/15, A23L 33/17, A23L 33/16, A23L 33/00, A23L 33/105, A23L 33/18, A23L 33/175

(54) **FOOD COMPOSITION CONTAINING AMINO ACIDS AND COCOA**
NAHRUNGSMITTELZUSAMMENSETZUNG MIT AMINOSÄUREN UND KAKAO
COMPOSITION ALIMENTAIRE CONTENANT DES ACIDES AMINÉS ET DU CACAO

(30) Priority: 30.11.2012 DE 202012011540 U
(43) Date of publication of application: 24.02.2016
(73) Proprietor: Greenforce Nutrition GmbH, 83346 Bergen (DE)
(72) Inventor: BUDEMANN, Achim, 83367 Petting (DE); VEEN, Markus, 84453 Mühldorf (DE)
(74) Representative: Lieck, Hans-Peter
(86) International application number: PCT/EP2013/003613
(87) International publication number: WO 2014/082751

(56) References cited:
- EP-A1- 2 022 344
- WO-A1-02/45520
- WO-A1-2012/027285
- US-A- 2 590 647
- TARREGA A ET AL: "Effect of whey and pea protein blends on the rheological and sensory properties of protein-based systems flavoured with cocoa", JOURNAL OF FOOD ENGINEERING, vol. 109, no. 3, April 2012 (2012-04), pages 467-474, XP002722339,

## Description

The present invention relates to a drink powder that contains a pea protein hydrolysate and cocoa powder.

Nutritional compositions comprising pea protein hydrolysates are disclosed in WO2012/027285 A1.

Preferably, the food composition according to the invention, especially when it is a solid or powder-form food composition, also contains creatine, especially creatine monohydrate, more especially Creapure©.

More preferably, the food composition according to the invention contains at least one B vitamin and/or a zinc compound.

More preferably, the food composition according to the invention contains all 20 standard amino acids in the form of the free amino acid and/or in the form of peptides.

The drink powder according to the invention contains 40-80% by weight hydrolysed pea protein (especially enzymatically hydrolysed pea protein) and 20-50% by weight cocoa powder. Preferably, this composition also contains creatine (for example creatine monohydrate) and/or at least one B vitamin and/or a zinc compound.

A drink powder of the present invention contains :
40 - 80 % by weight hydrolysed pea protein and
20 - 50 % by weight cocoa powder.

Preferably, the following B vitamins are used in the composition according to the invention: riboflavin (vitamin B2), nicotinic acid (vitamin B3), pyridoxine (vitamin B6), folic acid (vitamin B9) and cyanocobalamin (vitamin B12).

Especially preferably, the following B vitamins are used in the composition according to the invention: riboflavin (vitamin B2), pyridoxine (vitamin B6) and cyanocobalamin (vitamin B12).

As zinc compounds there are preferably used zinc salts, especially inorganic zinc salts, such as zinc sulfate (for example in the form of zinc sulfate monohydrate).

The cocoa is used in the form of cocoa powder. Preferably, biologically natural cocoa powder is used. Especially preferably, the food composition of the present invention contains pure cocoa.

The amino acids and/or peptides are preferably prepared by hydrolysis of vegetable proteins (especially by hydrolysis of pea protein).

The food composition of the present invention is especially a purely vegetable-derived drink powder containing amino acids, creatine and cocoa.

The composition is a substantially dehydrated composition to which the consumer needs to add water and/or some other liquid, such as milk, in order to produce a food product for consumption.

The food composition according to the invention is a drink powder. Also described herein are a finished drink (which is prepared, for example, in a drinks bottle), a fruit cereal (such as, for example, a muesli), a bar (for example an amino acid fruit bar), chocolate, pralines or ice cream.

The drink powder contains preferably 25-40 %, especially 30-35 %, more especially about 33 % pure cocoa powder, the percentages relating to percent by weight (% by weight).

The drink powder contains preferably 50-70 %, especially 60-65 % pea protein hydrolysate the percentages relating to percent by weight (% by weight).

Of the proteinogenic amino acids, 20 are encoded by codons of the genetic material. They are therefore referred to as canonical amino acids or as standard amino acids. The 20 standard amino acids are: alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine and valine. Hereinbelow the term amino acids preferably relates to those 20 standard amino acids.

The food composition of the present invention preferably contains all 20 standard amino acids. These acids support cell building and immediate regeneration of musculature. The amino acids can be present both individually and in the form of peptides. The amino acids and/or peptides are used in the form of a pea protein hydrolysate.

There are 20 different standard amino acids, from which the human organism forms more than 100,000 different structures. Of the 20 amino acids, 15 react neutrally, three react basically and only two actually react acidically. Amino acids therefore also do not give rise to over-acidification. It just means that, in addition to an amino group NH₂, which reacts basically and is able to accept a proton, a carboxy group also donates a proton which reacts acidically.

Among the 20 amino acids there are eight so-called essential amino acids. These acids must be supplied to the body *via* food, because the body is unable to make them itself. "Essential" relates only to the ability to be produced in the body - the essential amino acids are no more or less important than the others.

All 20 amino acids are important, because they achieve their optimum mechanism of action only as an integrated whole. A lack of one amino acid cannot be compensated by higher proportions of other amino acids. A deficiency has the result that it is no longer possible to produce sufficient endogenous protein. The so-called protein synthesis no longer functions in the optimum way, because the synthesis of muscle proteins is dependent upon the availability of all 20 amino acids - however high the protein content of the food. The absence of only a single amino acid, or its presence in an insufficient amount, not only affects muscle metabolism and the entire body: by way of losses in the quality of certain structural proteins, enzymes and messenger substances, the amino acid deficiency also has an adverse effect on brain function. Therefore a well-balanced amino acid balance is of great importance not only for optimum functioning of the physical organism (muscles, tendons, ligaments, bones, skin, hair, nails, organs and the immune system) but also for the psychological components of overcoming stress and of mental powers.

An amino acid balance can be said to be well-balanced when approximately 100 g of those 20 amino acids are present in the body. 90 percent thereof are located in the cells, where they are used primarily for protein synthesis. The organism can work effectively only when the loss of amino acids caused by high physical stress (for example training) or psychological strain (for example stress) is rapidly compensated again; here the rapid supply of the amino acids, as well as the high quality thereof, is an important factor. The time window for replenishing the amino acid pool is only about 60 minutes.

In the case of intense strength or endurance training, the loss of amino acids is about 20 g, while running a marathon in three hours "costs" about 40 g of amino acids. The amino acid depot therefore enters a state similar to that in cases of serious illness. The losses should be compensated immediately after exertion. On a day without training or great stress, however, it is sufficient to ingest about 15 g of free amino acids both morning and evening in order to keep the amino acid depot full. It is important that the amino acids supplied are of high quality. For that reason it is not necessary or advisable to consume enormous quantities of free amino acids. The important factor is always whether the amino acid pool is full so that the organism can utilize the ingested food in an optimum way and therefore work in an optimum way. A higher dose will not bring about any positive additional effects.

The immune system can function properly only when sufficient amino acids are available for the synthesis of the defense proteins. Susceptibility to infection is particularly high after great physical or psychological stress, which is why people become ill after a particularly stressful work period
- not infrequently at the start of a holiday. Another risk factor is intense physical training. Especially when combined with reduced food intake - for example in order to lose weight
- susceptibility to infection is very high. This is a result of a weakened immune system which has received insufficient building materials for its increased requirements. Particularly in phases of increased physical activity or in cases of stress, an adequate and balanced supply of all amino acids is crucial. Particularly important amino acids (or peptides containing them) for the immune system and its functions are listed below:
   Arginine promotes the secretion of growth hormone and insulin. As growth hormone it promotes the formation of T-lymphocytes and dendritic cells. Arginine also supports the phagocytes in warding off tumor cells and increases the production of nitrogen monoxide (NO). NO is important for killing bacteria, viruses, fungi, and parasites.

Alanine is an important energy source for the white blood cells.

Branched-chain amino acids (BCAAs) (leucine, isoleucine and valine) are especially important for the immune system when the supply of protein as a whole is low.

Glutathione (a tripeptide of the amino acids glutamic acid, cysteine and glycine) is one of the most important free-radical scavengers in our organism. Glutathione is also crucially significant for the immune function of the cell. Too little methionine and consequently too little cysteine crucially impairs immunological processes.

Glutamine is an important supplier of energy for the cells of the immune system.

Lysine: too little lysine means reduced protein synthesis and consequently a restriction of the organism's immune responses. Lysine brings about more rapid healing of herpes infections (for example cold sores).

Histidine produces histamine which plays an important part in inflammatory processes. Histidine can reduce the weakening of the immune system caused by UV radiation and evidently has an important part to play particularly in the immune function of the skin.

Proline is important for the immune functions of the intestine, primarily in warding off harmful bacteria.

Threonine is important on account of its significance for the mucous layer in the intestine and for the formation of antibodies.

Phenylalanine: sufficient phenylalanine is crucial for nitrogen monoxide production in the leucocytes and accordingly for the immune functions thereof.

In the brain too, amino acids serve as building blocks for the structures thereof, but they also act as messenger substances (or precursors thereof) and provide communication between nerve cells. For that reason, a lack or imbalance of amino acids can lead to psychological disorders. Listlessness, lack of concentration, anxiety states, depression, memory lapses or motivation problems can be the result.

The interplay of all neurotransmitters is a crucial factor in whether we are able to work under pressure and feel motivated, in a good mood and full of energy - or feel anxious, demotivated and depressed. It is therefore important that protein ingested *via* food is in equilibrium with respect to all amino acids. This is because the quality of the protein is determined by the balance of the amino acids. Only when the amino acid pool is balanced can protein be used by the body in the optimum form for building endogenous structures. Important neurotransmitters for mental strength are listed below:
Serotonin improves mood and combats depression. The amino acid tryptophan is a precursor.

Adrenaline / noradrenaline stimulates, heightens mood and helps to combat stress. The amino acid phenylalanine is a precursor.

Acetylcholine increases attentiveness and improves memory performance. Choline is a precursor.

Dopamine is regarded as a happiness hormone in human beings. The amino acid phenylalanine is a precursor.

Tryptamines include melatonin which is an important supplier of methyl groups in the brain. The amino acid tryptophan is a precursor.

The amino acid glycine in bone marrow participates in the coordination of motor function.

Glutamic acid acts as an antagonist to GABA.

Amino acids also play a central role in combating stress and stress symptoms. This is not only important for psychological health but also helps to avoid the physical effects of stress - which are often associated with comfort eating, excessive alcohol consumption and similar harmful behaviors. This in turn can give rise to lipometabolic disorders, overweight, inferiority complex, diabetes, immune system disorders and, not least, depression.

The most important amino acids for stress are listed below:
Tryptophan is a precursor of the messenger substance serotonin which provides for an equable and good basic mood.

Phenylalanine is the precursor for stress hormones and forms tyrosine. Tyrosine in turn acts against listlessness and discontent. In addition, phenylalanine is the precursor of dopamine which helps to improve brain performance, mood and psychological resilience.

Arginine is the precursor of nitrogen monoxide (NO) and can improve vascular blood flow, reduce blood pressure and therefore protect blood vessels. Chronic stress, in particular, provokes inflammatory reactions at the vessel walls and leads to an increased arginine requirement.

Glycine provides for the energy supply to the brain.

Glutamine stimulates the immune system in the case of stress-related overload. Glutamine can stimulate the synthesis of glutathione.

Glutathione is an important free-radical scavenger. Particularly in the case of stress, it is crucial to prevent the proliferation of free radicals.

Even though sport is healthy, training also puts a strain on the body. It is therefore important to provide the body with the correct building material, because only in that way does rapid regeneration - and the increase in performance - function. In order to enable the body to perform optimum regeneration in rest phases, the organism must be supplied with amino acids.

Amino acids can help to prevent muscle soreness. The supply of essential amino acids stimulates protein synthesis in the muscles. This results in optimized regeneration and prevents muscle atrophy in the catabolic (breaking-down) phase after training. That is to say, conversely: if amino acids are not available quickly enough, the body obtains them from the muscle tissue - it eats itself as it were. This applies both to strength training and to endurance exercise. It should be noted that the necessary amino acids need to have passed into the cells within an hour after training or competition. This is achieved only by free, that is to say non-protein-bound, amino acids. Purely vegetable-derived amino acids or peptides are therefore preferred in the composition according to the invention. Unlike protein preparations, they need not first be digested and decomposed in the intestine and stomach. They arrive directly in the cell metabolism *via* the bloodstream and can therefore be processed and utilized by the body as soon as 20 to 30 minutes after ingestion.

As already mentioned above, the human amino acid pool is about 100.g. An intense strength training or endurance session consumes about 20 g from that pool. A marathon run completed in three hours consumes 40 g of amino acids. That loss must be compensated, because a loss of from 20 to 40 percent of the amino acid pool corresponds to the state in cases of serious illness.

A normal diet alone cannot replace the amino acids. Over the course of time the training athlete thus slips into an ever more catabolic (breaking-down) state, which inevitably results in overtraining and illness because the immune system is no longer capable of fulfilling its defense functions. Amino acids in the urea cycle also bring about detoxification of the stress-related ammonia by the liver.

During intense training, the growth hormone secretions (HGH) reach up to 100 times the initial value and remain at ten times that value for approximately one hour. The supply of amino acids ensures that the body profits in an optimum way from the anabolic (building) action of HGH secretion. Supporting HGH secretion is therefore important also because it plays a major part in the acid/base balance. Stresses resulting from training and competition cause the organism to slip rapidly into the acidic range, which in turn weakens the immune system. Amino acids are a means of counteracting this.

This applies not only to competitive sportsmen. When a person first takes up a sporting activity, even minor exertion leads to breathlessness. Although the work performed is very limited in scope and intensity in comparison with that of a competitive sportsman, it has the same effect on the untrained organism: the body enters into a state of stress. The amino acid pool is greatly reduced, with all the consequences for the organism as a whole. This is where the composition of the present invention helps and it has a further additional effect: muscle soreness is much less severe and can often even be prevented altogether.

Cocoa has very positive effects on physical regeneration. The composition of the present invention contains, for example, about 33 % high-purity cocoa. Especially preferably, the food composition of the present invention contains pure organic cocoa.

Studies relating to the effect of cocoa:
James Madison University in Virginia (2009): researchers arranged for professional football players to drink cocoa regularly over a period of several weeks. Regular intake of cocoa significantly reduced the number of muscle injuries in comparison with a control group who drank no cocoa. In this case the creatine kinase was measured. If a high concentration of the enzyme can be detected, muscle injuries are less frequent. Conversely, they occur more often if the content of creatine kinase is reduced. It is assumed that the flavonoids in cocoa are responsible for this.

Journal of Sport Nutrition and Exercise (2006): nine male cyclists cycled to the point of muscle failure. They then took a break of four hours. During that time one group drank a cocoa drink and the other group a high-carbohydrate energy drink. The athletes then continued cycling up to their physical performance limits. Result: the group having the cocoa drink was able to cycle approximately 50 percent longer.

Kean University in New Jersey (2011): in this case too, athletes who drank cocoa were observed to have significantly delayed fatigue symptoms - in comparison with a group of athletes who drank high-carbohydrate drinks.

Cocoa consumers live longer on average. This has been shown by a study carried out by the Netherlands National Institute for Public Health and the University of Wageningen. In the study, 470 men, divided into cocoa drinkers and non-cocoa drinkers, were observed for 15 years. At the start of the study all the men were over 70 years old. On conclusion of the study (that is to say 15 years later), only 24 percent of the non-cocoa drinkers were still alive. Of the group of men who had consumed from 0.4 g to 2.3 g of cocoa per day, 32 percent were still alive. Of the test subjects who had consumed more than 2.3 g per day, 43 percent were still alive. Those men who had taken more than 2.3 g of cocoa per day had lower blood pressure than the non-cocoa drinkers. This is presumably attributable to the flavonoids present in cocoa. They protect the heart and exhibit an anti-oxidant action. They thereby protect the LDL lipoproteins from oxidation and can lower the blood cholesterol level, but without lowering (good) HDL cholesterol. A 20 g portion of GREENFORCE (a generous heaped tablespoonful) has a cocoa content of about 6 g.

The food composition of the present invention preferably contains creatine, especially creatine monohydrate. In the body, creatine is involved in all processes that require energy. Muscle, brain and nerve cells cannot function without creatine. All cells of the body use as energy source adenosine triphosphate (ATP), which is broken down to form adenosine diphosphate (ADP). During intense training or competition, the consumption of ATP in muscle can rise to twenty times the normal value. At maximum exertion the ATP stored in the body would be enough for only one or two seconds. The muscles must therefore form ATP in order to be able to achieve full performance for a longer period. Creatine is necessary for that purpose. The food composition of the present invention preferably contains the high-quality creatine of Creapure©. In the body it is converted into phosphocreatine, which in turn enables the muscles to synthesize ATP from ADP again. The effects of the composition according to the invention are greater training tolerance and higher performance, a smaller decrease in pH in the muscle during exercise (less over-acidification), greater endurance, increased muscle mass and muscle power and faster recovery:
Expressed in numerical terms this means:
up to 15 percent more maximum power and power endurance;
up to 20 percent more maximum power in interval training;
up to 30 percent increase in power and energy output in the short sprint range;
up to 15 percent in the case of repetition sprints.

While the positive effect of creatine on physical performance and the associated muscle metabolism has been known for a long time, the latest studies also demonstrate its positive effects on mental performance. Like muscle cells, brain cells and nerve cells utilize ATP (adenosine triphosphate) as a rapidly available energy source.

Studies also show that creatine promotes the growth and survivability of bone-forming cells. This results in a slowing down of the loss of bone density and mechanical strength. At the same time, the activity of the bone-degrading cells is reduced.

The human organism is subjected to the constant synthesis and degradation of several million cells per second. All our skin cells are renewed every 25 days, our 'fingernails and toenails are permanently regrowing. We lose about 100 hairs daily - and just as many regrow again in the same period. This functions, however, only with a well-balanced amino acid balance. It is undermined by lack of sleep, everyday stress, harmful environmental influences and poor diet. The skin loses its radiance and tautness, hair falls out or becomes grey, and the nails become brittle.

The skin is the largest human organ and can weigh up to ten kilograms. The skin, which consists of three layers, is entirely renewed in a cycle of about 25 days. The middle layer is crucial to the skin's outward appearance. Collagens and elastic fibers form its skeleton - and hair roots and sensory receptors for the sense of touch are also contained therein. The amino acids are primarily responsible for the structure of the skin fibers, since the collagenic fibers consist chiefly of the amino acids glycine, lysine and proline, and the elastic fibers consist mainly of valine and lysine.

These amino acids not only build destroyed structures, however, but also increase the inflow of liquid and bind it in the cell. As a result, more protein and therefore also collagen can be produced. The amino acid glutamine plays a substantial part in these processes and also provides for a balanced acid/base balance. Strong sunlight subjects the skin to especially high stress. The responsibility for this lies with so-called free radicals which provoke (excessive) oxidation - the skin "roasts" to a certain extent. The amino acid methionine is essential for protection against free radicals, because it forms the starting material for effective free-radical scavengers.

In addition to the amino acids, creatine likewise plays an important part in healthy skin. It promotes the energy metabolism of the cells in the body and accordingly also supports energy generation and renewal processes in the skin.

The main building block of hair and nails is keratin. The most common amino acids in keratin are phenylalanine, isoleucine, valine and alanine and also the sulfur-containing amino acids cysteine and methionine. A good supply of amino acids has a positive effect on the quality of the skin, hair and nails. Particularly in the case of stress and with increasing age, the targeted substitution of amino acids is a good way of maintaining a high level of skin, hair and nail quality.

Even in quite young people - approximately from the age of 25 and at the latest from the age of 30 - the natural output of growth hormones declines. The slow but constant process of ageing begins, but can it proceed very variably. Some 60 year olds have the appearance of 40 year olds, while on the other hand some 40 year olds resemble 60 year olds. Different genetic dispositions aside, factors such as lifestyle, mental and physical activity, sense of achievement and feelings of contentment as well as a balanced diet are crucial.

The positive effects of the food composition according to the invention on psychological and physical fitness and its support of regeneration also counteract the ageing process.

For the food composition of the present invention there are preferably used exclusively amino acids and/or peptides of vegetable origin.

In comparison with animal-derived amino acids they have the following advantages:
- readily digested without stressing the body;
- 100 percent efficacy (in the case of animal-derived amino acids: about 30 percent lost through intestinal bacteria);
- immediately available in the body;
- suitable for vegetarians and vegans;
- guaranteed free of slaughterhouse waste;
- suitable for people of any faith;
- the proportion of animal-derived protein present in the body is enhanced by the supply of vegetable-derived amino acids.
   Peas contain essential amino acids and - unlike cereal products - are also suitable for people with gluten intolerance.

For the preparation of the amino acids and/or peptides, protein from peas is hydrolysed, especially enzymatically. The preparation process enables the size of the peptides to be varied. Normally these peptides are virtually inedible on account of their bitter taste and can be ingested only in the form of capsules. Surprisingly, the addition of cocoa to the food composition of the present invention results in a pleasant-tasting product. As a result, significantly larger amounts of proteins can be ingested. A preparation process for a protein hydrolysate from peas is described, for example, in DE 692 20 568 (WO 92/15697).

Hydrolysed pea protein can also be referred to as pea hydrolysate, pea protein hydrolysate, protein hydrolysate from peas, etc.

### Exemplary embodiments

### 1. Drink powder:

### a) Ingredients:

Enzymatically hydrolysed pea protein, cocoa powder, creatine monohydrate, sweeteners: sodium cyclamate, saccharine, sucralose, riboflavin (vitamin B2), pyridoxine (vitamin B6), cyanocobalamin (vitamin B12), zinc sulfate monohydrate.

| Nutritional information | 100 g of powder | per portion (20 g) |
|---|---|---|
| Calorific value | 1428 kJ / 337 kcal | 285 kJ / 67 kcal |
| Protein | 70.0 g | 14.0 g |
| Carbohydrates | 7.5 g | 1.5 g |
| Fat | 3.0 g | 0.6 g |
| of which saturated fatty acids | 1.5 g | 0.3 g |
| Cholesterol | 0.0 g | 0.0 g |
| Vitamin B2 | 3.1 mg | 0.46 mg / 66 %* |
| Vitamin B6 | 3.1 mg | 0.46 mg / 66 %* |
| Vitamin B12 | 5.3 µg | 0.80 µg / 66 %* |
| Zinc | 22 mg | 3.30 mg / 66 %* |
| Creatine monohydrate | 3000 mg | 600 mg |

| | | |
|---|---|---|
| * RDA (based on two daily portions) | | |

### b) Ingredients:

Enzymatically hydrolysed pea protein, cocoa powder, creatine monohydrate, cane sugar, riboflavin (vitamin B2), pyridoxine (vitamin B6), cyanocobalamin (vitamin B12), zinc sulfate monohydrate.

### c) Ingredients:

Enzymatically hydrolysed pea protein, cocoa powder, creatine monohydrate, stevia, riboflavin (vitamin B2), pyridoxine (vitamin B6), cyanocobalamin (vitamin B12), zinc sulfate monohydrate.

### 2. Drink (not according to the invention):

### a) Ingredients:

Enzymatically hydrolysed pea protein, cocoa powder, creatine monohydrate, sweeteners: sodium cyclamate, saccharine, sucralose, riboflavin (vitamin B2), pyridoxine (vitamin B6), cyanocobalamin (vitamin B12), zinc sulfate monohydrate, water.

### b) Ingredients:

Enzymatically hydrolysed pea protein, cocoa powder, creatine monohydrate, cane sugar, riboflavin (vitamin B2), pyridoxine (vitamin B6), cyanocobalamin (vitamin B12), zinc sulfate monohydrate, water.

### c) Ingredients:

Enzymatically hydrolysed pea protein, cocoa powder, creatine monohydrate, stevia, riboflavin (vitamin B2), pyridoxine (vitamin B6), cyanocobalamin (vitamin B12), zinc sulfate monohydrate, water.

### 3. Fruit cereal (not according to the invention):

### Ingredients:

Enzymatically hydrolysed pea protein, cocoa powder, creatine monohydrate, riboflavin (vitamin B2), pyridoxine (vitamin B6), cyanocobalamin (vitamin B12), zinc sulfate monohydrate, dried fruits, cereal flakes, honey.

### 4. Cereal bar (not according to the invention)

### Ingredients:

Enzymatically hydrolysed pea protein, cocoa powder, creatine monohydrate, riboflavin (vitamin B2), pyridoxine (vitamin B6), cyanocobalamin (vitamin B12), zinc sulfate monohydrate, sugar, cereal flakes, dried fruits.

## Claims

1. Drink powder, containing:
a) 40 - 80 % by weight hydrolysed pea protein; and
b) 20 - 50 % by weight cocoa powder.

2. Drink powder according to claim 1, which also contains creatine.

3. Drink powder according to claim 1 or 2, which also contains at least one B vitamin and/or a zinc compound.

## Patentansprüche

1. Getränkepulver, enthaltend:
a) 40 - 80 Gew.-% hydrolysiertes Erbseneiweiß; und
b) 20 - 50 Gew.-% Kakaopulver.

2. Getränkepulver nach Anspruch 1, welches weiterhin Kreatin enthält.

3. Getränkepulver nach Anspruch 1 oder 2, welches weiterhin mindestens ein B-Vitamin und/oder eine Zinkverbindung enthält.

## Revendications

1. Poudres pour boissons, contenant :
a) 40 - 80 % en poids de protéines de pois hydrolysées; et
b) 20 - 50 % en poids de cacao en poudre.

2. Poudres pour boissons selon la revendication 1, qui contient en outre de la créatine.

3. Poudres pour boissons selon la revendication 1 ou 2, qui contient en outre au moins une vitamine B et/ou un composé de zinc.
